# EUROPÄISCHE PATENTSCHRIFT

(11) **EP 0 781 585 B1**
(45) Veröffentlichungstag und Bekanntmachung des Hinweises auf die Patenterteilung: **19.03.2003**
(21) Anmeldenummer: 96810897.7
(22) Anmeldetag: 23.12.1996
(51) Int. Cl.: B01D 46/04

(54) **Einrichtung zum Entstauben von Gas**
Apparatus for dedusting a gas
Dispositif de dépoussièrage d'un gaz

(30) Priorität: 29.12.1995 CH 370795
(43) Veröffentlichungstag der Anmeldung: 02.07.1997
(73) Patentinhaber: GLATT GMBH, 79589 Binzen (DE)
(72) Erfinder: Bernhard, Luy, Dr., 79102 Freiburg (DE); Tondar, Matthias, 78966 Hausen i.W. (DE)
(74) Vertreter: Zbinden, Paul A.

(56) Entgegenhaltungen:
- WO-A-91/03306
- DE-A- 3 341 786
- DE-A- 3 941 321
- US-A- 4 645 520
- US-A- 5 112 368

## Beschreibung

Die Erfindung betrifft eine Einrichtung zum Entstauben von Gas, insbesondere von durch ein teilchenförmiges Gut hindurchgeleitetem Gas.

Hier seien zunächst noch die im folgenden benützten Begriffe "Rohgas-Raum" und "Reingas-Raum" erläutert. Unter dem Rohgas-Raum wird ein an mindestens ein Filter angrenzender Raum verstanden, der das zu filtrierende und zu entstaubende Gas enthält und aus dem das letztere in das Filter hineinströmt. Unter einem Reingas-Raum wird dann ein an das bzw. an mindestens ein Filter angrenzender Raum verstanden, in den das Gas nach dem Durchströmen des Filters bzw. der Filter gelangt.

Die Einrichtung besitzt mindestens einen einen Rohgas-Raum umschliessenden Behälter und mindestens ein in den Rohgas-Raum hineinragendes Filter. Die Einrichtung kann zum Beispiel einen Gut-Behälter besitzen und ausgebildet sein, um Gas durch den Rohgas-Raum und ein in diesem vorhandendes, teilchenförmiges Gut hindurchzuleiten und das Gut zu bewegen sowie zu behandeln, wobei das Gut zum Beispiel mit dem Gas verwirbelt und/oder durch einen den Rohgas-Raum unten begrenzenden, eine Scheibe aufweisenden Rotor bewegt werden kann. Die Einrichtung kann beispielsweise zum Bewegen und Behandeln eines teilchenförmigen Gutes dienen, das zur Bildung eines Arzneimittels mit mindestens einem pharmazeutischen, d. h. eine biologische Wirkung ergebenden Wirkstoff vorgesehen ist. Der bzw. mindestens ein Wirkstoff kann dabei zum Beispiel in dem in festem, trockenem oder feuchtem Zustand in den Gut-Behälter eingebrachten, teilchenförmigen Gut enthalten sein. Es ist jedoch auch möglich, das teilchenförmige Gut in Gut-Behälter mit einer Flüssigkeit zu besprühen, die möglicherweise einen gelösten oder dispergierten Wirkstoff enthält. Die Einrichtung kann zusätzlich zum Gut-Behälter oder anstelle von diesem einen Nachentstauber und/oder eine sonstige Filtriervorrichtung mit einem Behälter aufweisen, der bei der Verwendung nicht selbst ein teilchenförmiges Gut enthält, dem aber von einem anderen, ein teilchenförmiges Gut enthaltenen Gut-Behälter zu entstaubendes Gas zugeführt wird. Die Einrichtung kann ferner als Sprühtrockner ausgebildet sein.

Eine aus der US-A-4 645 520 bekannte Wirbelschicht-Einrichtung besitzt einen Behälter, der einen oben durch einen inneren Wandungsteil begrenzten Wirbel- und Rohgas-Raum enthält. Am inneren Wandungsteil sind in den Rohgas-Raum hineinragende Filter befestigt. Jedes Filter besitzt einen Mantel mit einem zylindrischen, Gasdurchlasslöcher aufweisenden, vorzugsweise aus einem perforiertem Blech oder eventuell aus einem Kunststoffgitter oder Drahtgeflecht gebildeten Stützelement, einen auf dessen Aussenseite angeordneten, von diesem abgestützten Filtrationselement und zu dessen Befestigung am Stützelement dienende Bandagen. Das Filtrationselement ist durch einen flexiblen, Falten aufweisenden Schlauch aus Papier oder einem textilen Gewebe gebildet. Jedes Filter begrenzt einen Filter-Innenraum, der durch einen den inneren Wandungsteil durchdringenden Durchgang mit einem sich oberhalb des inneren Wandungsteils befindenden Reingas-Raum verbunden ist. Für jedes Filter ist ein Reinigungsgas-Einlass vorhanden, der vom Reingas-Raum her durch den Durchgang bis annähernd zum unteren Ende des Filters in den Filter-Innenraum hineinragt und einen aufblähbaren Balg zum wahlweisen Verschliessen des Durchgangs besitzt.

Diese bekannte Einrichtung hat den Nachteil, dass die aus Papier oder einem textilen Gewebe bestehenden, nur bei kleinen Bereichen ihrer Innenfläche am Stützelement anliegenden sowie nur bei wenigen Stellen befestigten Filtrationselemente nur eine geringe Festigkeit sowie eine kurze Lebensdauer haben und auch nicht beständig gegen hohe Temperaturen sind. Es besteht insbesondere auch eine grosse Gefahr, dass die Filtrationselemente beim Ausblasen des Filters beschädigt werden. Das Reinigungsgas darf daher nur einen relativ niedrigen Druck auf die Filtrationselemente ausüben. Ein kleiner Reinigungsgasdruck ermöglicht jedoch nur eine mangelhafte Reinigung der Filtrationselemente. Zudem beeinträchtigen die Falten der Filtrationselemente deren Reinigbarkeit. Die bekannte Einrichtung besitzt auch keine Vorrichtungen, um die Filter innerhalb des Behälters zu waschen. Es wäre auch praktisch fast nicht möglich, die Filter der bekannten Einrichtung innerhalb des Behälters durch Besprühen mit einer unter Druck stehenden Reinigungsflüssigkeit sauber zu waschen, weil dies die Lebensdauer der Filtrationselemente noch mehr verkürzen würde. Die Filter müssen daher zum Waschen jeweils aus dem Behälter ausgebaut werden, was sehr zeitraubend ist und die Umgebung sowie das Bedienungspersonal kontaminieren kann.

Wenn ein Balg der aus der US-A 4 645 520 bekannten Einrichtung einen Durchgang vollständig abschliessen soll, muss er sehr stark aufgebläht und deformiert werden. Der Balg schliesst daher den Durchgang in der Praxis wahrscheinlich nur schlecht ab, so dass beim Reinigen eines Filters ein erheblicher Teil des in den Filter-Innenraum einströmenden Reinigungsgases durch den Durchgang in den Reingas-Raum strömt und nichts zur Reinigung des Filters beiträgt. Die Bälge werden beim Aufblähen und anschliessenden Kontrahieren stark beansprucht sowie einem starken Verschleiss unterworfen und müssen daher wahrscheinlich schon nach einer relativ kurzen Betriebsdauer ersetzt werden. Ferner sind die vermutlich aus natürlichem und/oder synthetischem Gummi bestehenden Bälge kaum gegen hohe Temperaturen beständig und werden bei tiefen Temperaturen brüchig. Zudem sind die gemäss der US-A 4 645 520 ausgebildeten Filtrationselemente und Bälge auch nicht ausreichend druck-, hitze- und feuerbeständig, um einer möglicherweise im Rohgas-Raum stattfindenden Staub- und/oder Lösungsmittel-Explosion zu widerstehen, so dass sie durch eine derartige Explosion zerstört werden und die Ausbreitung der Explosion durch das Filter hindurch ermöglichen.

Andere aus der Praxis bekannte Wirbelschicht-Einrichtungen und sonstige Einrichtungen zum Entstauben von Gas besitzen ebenfalls Filter mit Filtrationselementen, die aus flexiblen Schläuchen aus Papier oder einem textilen Material bestehen und meistens axiale oder kreisförmige oder schraubenlinienförmige Falten haben. Diese Filter haben weitgehend ähnliche Nachteile wie die vorgängig beschriebenen, aus der US-A 4 645 520 bekannten Filter.

Die US-A 5 112 368 offenbart ein insbesondere zum Filtrieren von staubhaltigen Abgasen bei der Papierherstellung vorgesehenes, zylindrisches Filter mit einem aus perforiertem Blech bestehenden Stützelement und einem dieses umschliessenden Drahtgewebe. Das Drahtgewebe ist an beiden Enden mit Klemmschellen am Stützelement befestigt. Ferner ist eine Druckluftleitung mit einer sich oberhalb des oben offenen Filterendes befindenden Auslassöffnung vorhanden, um am Filter angelagerten Staub mit Druckluftstössen vom Filter zu lösen.

Der Erfindung liegt die Aufgabe zugrunde eine Einrichtung zum Entstauben von Gas zu schaffen, mit der Nachteile der bekannten Einrichtungen vermieden werden können und bei der insbesondere das bzw. jedes Filter stabil ist, eine hohe Lebensdauer hat, beständig gegen hohe und tiefe Temperaturen ist und gut innerhalb des Behälters reinigbar ist.

Diese Aufgabe wird erfindungsgemäss durch eine Einrichtung mit den Merkmalen des Anspruchs 1 gelöst.

Vorteilhafte Weiterbildungen der Einrichtung gehen aus den abhängigen Ansprüchen hervor.

Der Erfindungsgegenstand wird nun anhand in der Zeichnung dargestellter Ausführungsbeispiele näher erläutert. In der Zeichnung zeigt
die Fig. 1 einen vereinfachten Vertikalschnitt durch einen Gut-Behälter und einen Nachentstauber-Behälter einer Wirbelschicht-Einrichtung zum Behandeln eines teilchenförmigen Gutes,
die Fig. 2 einen vereinfachten Horizontalschnitt entlang der Linie II-II der Fig. 1 durch den Gut-Behälter,
die Fig. 3 einen Axialschnitt durch eines der im Gut-Behälter angeordneten Filter und die diesem zugeordnete Verschlussvorrichtung in grösserem Massstab als die Figuren 1 und 2,
die Fig. 4 einen Schnitt entlang der Linie IV-IV der Fig. 3 durch das Filter,
die Fig. 5 einen schematischen Axialschnitt durch einen Abschnitt des Mantels eines Filters in noch grösserem Massstab als die Figuren 3 und 4 und
die Fig. 6 einen Axialschnitt durch eine Variante eines Filters.

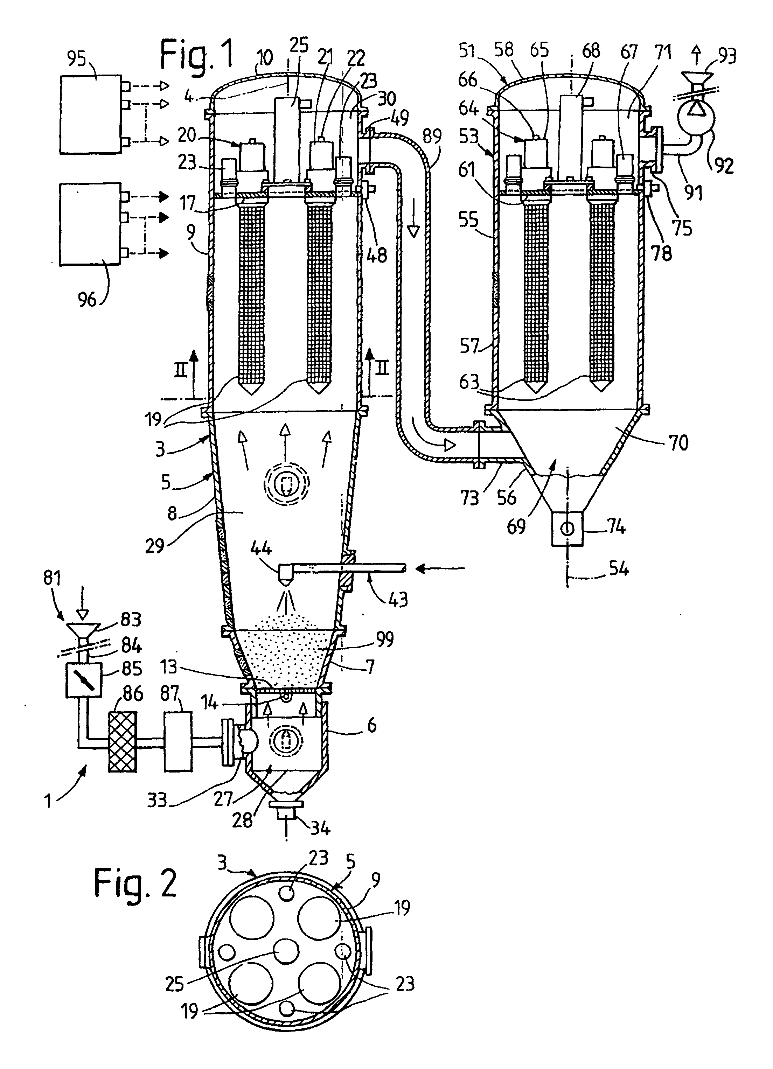

Die in der Fig. 1 ersichtliche Wirbelschicht-Einrichtung 1 besitzt einen Gut- und Wirbelschicht-Behälter 3, der im allgemeinen rotationssymmetrisch zu einer vertikalen Behälterachse 4 ist. Der Behälter 3 hat eine Wandung 5. Diese ist an einem nicht gezeichneten Gestell gehalten und besitzt mehrere lösbar und dicht miteinander verbundene Wandungsteile, beispielsweise von unten nach oben einen Boden-Wandungsteil 6, einen unteren konischen Wandungsteil 7, einen oberen konischen Wandungsteil 8, einen zylindrischen Wandungsteil 9 und einen Deck-Wandungsteil 10. Ein Siebboden 13 ist beim oberen Ende des Boden-Wandungsteils 6 im Behälter angeordnet und mit Lager- sowie Schwenkmitteln 14 gelagert, um eine horizontale Schwenkachse verschwenkbar und in verschiedenen Schwenkstellungen fixierbar. Der Gut-Behälter 3 weist ferner einen in der oberen Hälfte des zylindrischen Wandungsteils 9 angeordneten, fest und dicht mit diesem verbundenen, inneren Behälterteil bzw. inneren Wandungsteil 17 auf, der als Trennwand dient.

Der innere Wandungsteil 17 hält mindestens ein Filter 19 und nämlich mehrere Filter 19, wobei zum Beispiel vier gemäss der Fig. 2 im Gut- und Wirbelschicht-Behälter 3 um die Behälterachse 4 herum verteilte, voneinander im Abstand stehende Filter vorhanden sind. Jedes Filter 19 ist lösbar am inneren Wandungsteil 17 befestigt und ragt von diesem weg nach unten. Am Wandungsteil 17 ist für jedes Filter 19 eine in der Fig. 1 nur schematisch gezeichnete Gas-Reinigungsvorrichtung 20 mit einer Verschlussvorrichtung 21 und mit einem Reinigungsgas-Einlass 22 befestigt. Der innere Wandungsteil 17 hält ferner Nass-Reinigungsmittel zum Nass-Reinigen der Filter 19. Die Nass-Reinigungsmittel weisen mindestens eine Nass-Reinigungsvorrichtung bzw. Waschvorrichtung und nämlich vier erste Nass-Reinigungsvorrichtungen 23 sowie eine zweite, grössere Nass-Reinigungsvorrichtung 25 auf.

Die Wandungsteile 6, 7, 8, 9, 10 bilden zusammen die Aussenwand der Wandung 5 und schliessen einen Innenraum 27 dicht gegen die Umgebung ab. Der Siebboden 13, der als Trennwand dienende, innere Wandungsteil 17 und die an diesem befestigten Filter 19 sowie Vorrichtungen 21, 23, 25 unterteilen den Innenraum 27 in drei Teile, nämlich von unten nach oben in einen Gasverteiler-Raum 28, einen Wirbel- und Rohgas-Raum 29 und einen Reingas-Raum 30.

Jede Nass-Reinigungsvorrichtung 23, 25 hat ein sich im wesentlichen oberhalb des inneren Wandungsteils 17 im Behälter 3 befindendes Gehäuse und ein Sprühorgan. Jedes dieser Gehäuse begrenzt einen dicht gegen den Reingas-Raum 30 abgeschlossenen Gehäuse-Innenraum. Das Sprühorgan jeder Nass-Reinigungsvorrichtung 23, 25 ist verstellbar und vertikal verschiebbar im zugeordneten Gehäuse geführt und kann wahlweise in eine Ruhe-Stellung und in eine Reinigungs-Stellung gebracht werden. Die Sprühorgane befinden sich in der Ruhe-Stellung im wesentlichen innerhalb des zugeordneten Gehäuses und sind dann ungefähr oder genau bündig mit der unteren Fläche des inneren Wandungsteils 17. In der Reinigungs-Stellung befinden sich die Sprühorgane mindestens zum Teil im Wirbel- und Rohgas-Raum 29. Die Sprühdüsen bzw. Auslassöffnungen der Sprühorgane befinden sich dann zum Beispiel ungefähr in der Höhe der oberen Endabschnitte der Filter 19.

Der Boden-Wandungsteil 6 ist mit einem Gaseinlass 33 und einem verschliessbaren Gutauslass 34 versehen. Ferner kann noch eine Sprühvorrichtung 43 mit mindestens einem im Wirbel- und Rohgas-Raum 29 angeordneten Sprühorgan 44 mit mindestens einer Düse zum Zersprühen eines Bindemittels oder Uberzugsmaterials vorhanden sein. Der zylindrische Wandungsteil 9 ist bei einer Umfangstelle der oberen Fläche des inneren Wandungsteils 17 mit einem wahlweise freigebbaren und absperrbaren Flüssigkeitsauslass 48 und oberhalb des inneren Wandungsteils 17 mit einem Gasauslass 49 versehen.

Die Einrichtung 1 weist einen Nachentstauber 51 mit einem Nachentstauber-Behälter -Behälter 53 auf. Dessen Wandung 55 ist im allgemeinen rotationssymmetrisch zu einer vertikalen Behälterachse 54 und besitzt mehrere lösbar miteinander verbundene Wandungsteile, nämlich einen im wesentlichen konischen, sich nach unten verjüngenden Boden-Wandungsteil 56, einen zylindrischen Wandungsteil 57 und einen Deck-Wandungsteil 58. Im Nachentstauber-Behälter 53 ist ein innerer Behälter- bzw. innerer Wandungsteil 61 befestigt, der eine Trennwand bildet. Am inneren Wandungsteil 61 sind Filter 63 lösbar befestigt, denen je eine Gas-Reinigungsvorrichtung 64 mit einer Verschlussvorrichtung 65 und einem Reinigungsgas-Einlass 66 zugeordnet ist. Ferner sind erste Nass-Reinigungsvorrichtungen bzw. Waschvorrichtungen 67 und eine zweite Nass-Reinigungsvorrichtung bzw. Waschvorrichtung 68 am inneren Wandungsteil 61 lösbar befestigt.

Die Wandungsteile 56, 57, 58 bilden zusammen die Aussenwand der Wandung 55 und schliessen einen Innenraum 69 dicht gegen die Umgebung ab. Der als Trennwand dienende innere Wandungsteil 61 und die an diesem befestigten Filter 63 sowie Vorrichtungen 64, 67, 68 unterteilen den Innenraum 69 in einen Rohgas-Raum 70 und einen Reingas-Raum 71, wobei sich der Rohgas-Raum 70 unter und der Reingas-Raum 71 über dem inneren Wandungsteil 61 befindet. Der Behälter 53 hat einen in den Rohgas-Raum 70 mündenden Gaseinlass 73, einen am unteren Ende des Bodenteils 56 angeordneten, wahlweise verschliessbaren und freigebbaren Auslass 74, einen aus dem Reingas-Raum 71 herausführenden Gasauslass 75 und einen bei einer Umfangsstelle der oberen Fläche des inneren Wandungsteils 61 angeordneten, wahlweise freigebbaren und absperrbaren Flüssigkeitsauslass 78.

Die Wandungen 5 und 55 der beiden Behälter 3 bzw. 53 bestehen im wesentlichen - d. h. abgesehen von zwischen den verschiedenen Wandungsteilen vorhandenen Dichtungen und den Fenstern und dergleichen - aus metallischen Materialien, nämlich aus rostfreiem Stahl. Jedes Fenster besitzt zum Beispiel mindestens eine Glasscheibe.

Die Wirbelschicht-Einrichtung 1 besitzt noch Gasleitmittel 81, um ein Prozessgas, nämlich Luft, von unten nach oben durch die beiden Behälter 3, 53, hindurchzuleiten. Die Gasleitmittel 81 besitzen einen gegen die Umgebung der Behälter 3, 53 offenen Lufteinlass 83. Dieser ist über eine Gasleitung 84, eine Absperr- und/oder Regelvorrichtung 85, ein Staubfilter 86 und eine Gasaufbereitungsvorrichtung 87 mit dem Gaseinlass 33 des Gut- und Wirbelschicht-Behälters 3 verbunden. Die Gasaufbereitungsvorrichtung 87 weist zum Beispiel eine Heiz- und/oder Kühlvorrichtung und/oder eine Entfeuchtungsvorrichtung auf. Der Gasauslass 49 des Gut- und Wirbelschicht-Behälters 3 ist über eine Gasleitung 89 mit dem Gaseinlass 73 des Nachentstauber-Behälters 53 verbunden. Der Gasauslass 75 des letzteren ist über eine Gasleitung 91 und eine Saugvorrichtung 92 mit einem in die Umgebung mündenden Luftauslass 93 verbunden.

Die Einrichtung 1 besitzt nur schematisch dargestellte Reinigungsgas-Zufuhrmittel 95 mit mindestens einer Druckgasquelle, die zum Beispiel ein Filter, einen Kompressor und einen Druckluftbehälter aufweist. Die Reinigungsgas-Zufuhrmittel 95 besitzen ferner mit der bzw. jeder Druckgasquelle verbundene Absperrvorrichtungen, beispielsweise in der Nähe des Behälters 3 angeordnete, elektrisch oder pneumatisch betätigbare Ventile, deren Ausgänge durch Gasleitungen, welche nur durch gestrichelte Pfeile angedeutet sind, mit den Reinigungsgas-Einlässen 22 und 66 verbunden sind. Dabei ist zum Beispiel jeder einem Filter 19 bzw. 63 zugeordnete Reinigungsgas-Einlass 22 bzw. 66 durch eine separate Gasleitung mit einem Ventil verbunden, so dass jedem Filter separat aus Druckluft bestehendes Reinigungsgas zugeführt werden kann. Es bestände jedoch auch die Möglichkeit, zwei oder noch mehr Reinigungsgas-Einlässe 22 bzw. 66 durch eine gemeinsame Gasleitung mit einem gemeinsamen Ventil zu verbinden.

Die Einrichtung weist ferner nur schematisch dargestellte Reinigungsflüssigkeit-Zufuhrmittel 96 auf. Diese besitzen zum Beispiel mindestens eine Pumpe, mindestens ein Flüssigkeitsreservoir sowie Absperrvorrichtungen, beispielsweise elektrisch oder pneumatisch betätigbare Ventile. Diese sind durch Flüssigkeitsleitungen, die durch gestrichelte Pfeile angedeutet sind, mit den in den beiden Behältern 3 und 53 angeordneten Nass-Reinigungsvorrichtungen 23, 25, 67 und 68 verbunden.

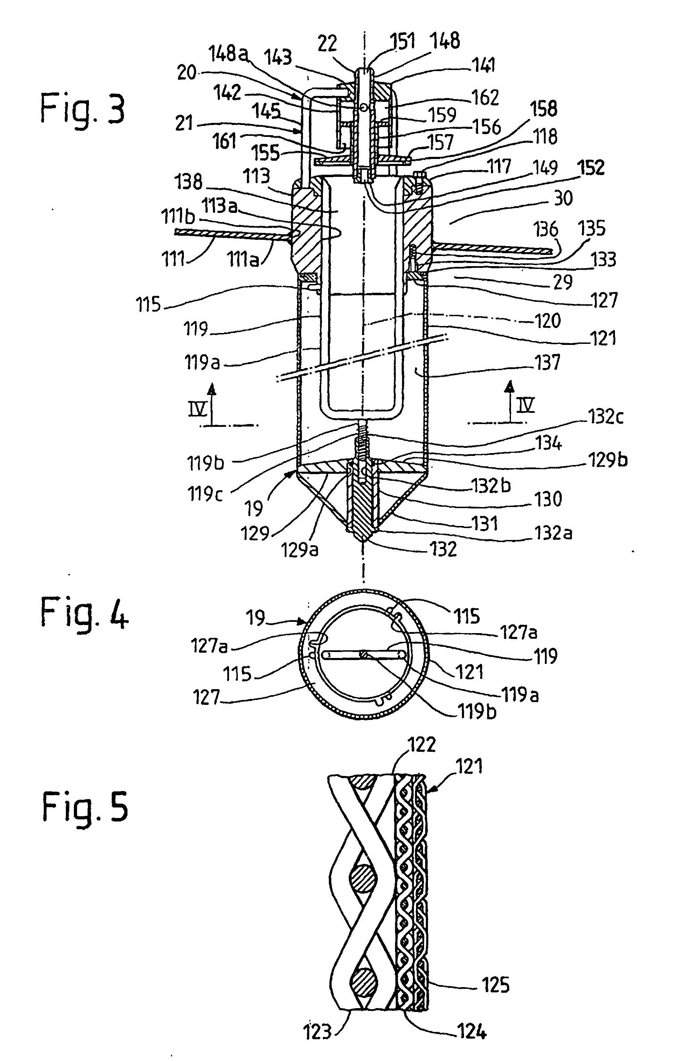

Anschliessend wird die Ausbildung von einem der Filter 19 anhand der Figuren 3 bis 5 näher beschriebene. Der innere Wandungsteil 17 besitzt eine Platte 111, die eine untere Fläche 111a und für jedes Filter 19 ein Loch 111b hat. Für jedes Filter 19 ist ein hülsenförmiger Support 113 vorhanden, der ein Loch 111b der Platte 111 durchdringt und fest sowie dicht mit dieser verbunden, nämlich verschweisst ist. Der Support 113 hat ein vertikales, im wesentlichen zylindrisches Loch 113a und an seinem sich unterhalb der Platte 111 befindenden Ende eine radiale, ebene Ringfläche sowie einen von dieser weg nach unten ragenden Kragen, an dem einige radial nach aussen ragende Stifte 115 befestigt sind. Ein Ringflansch 117 ist mit einigen Schrauben 118 lösbar an dem sich oberhalb der Platte 111 befindenden Ende des Supports 113 befestigt. Ein Halter 119 besitzt einen Oberteil 119a mit zwei oder mehr vertikalen Schenkeln sowie einem deren untere Enden miteinander verbindenden, einen Steg oder mehrere radiale Arme aufweisenden Verbindungsglied und einen von diesem weg vertikal nach unten ragenden Schaft 119b mit einem Aussengewinde 119c.

Jedes Filter 19 ist im wesentlichen rotationssymmetrisch zu einer zur Behälterachse 4 parallelen, vertikalen Filterachse 120, die auch die Achse des Lochs 111b sowie des Supports 113 bildet. Jedes Filter 19 ist als im wesentlichen formfestes Patronenfilter ausgebildet und besitzt einen gasdurchlässigen, zur Filterachse koaxialen und im wesentlichen rotationssymmetrischen, nämlich im wesentlichen zylindrischen Mantel 121. Dieser besitzt innen ein in der Fig. 5 ersichtliches, hohles, metallisches Stützelement 122, das aus mindestens einem relativ groben Drahtgewebe und nämlich aus einem inneren, gröberen Drahtgewebe 123 sowie einem äusseren, feineren, aus dünneren Drähten gebildeten Drahtgewebe 124 besteht. Der Mantel 121 besitzt ferner ein das Stützelement 122 umschliessendes, an diesem anliegendes, die äusserste Begrenzung des Mantels 121 bildendes, metallisches Filtrationselement 125, das aus einem noch feineren, aus noch dünneren Drähten gebildeten Drahtgewebe besteht als das äussere Drahtgewebe 124 des Stützelements 122. Die zwischen den Maschen der Drahtgewebe vorhandenen Lücken bilden Gasdurchlasslöcher. Das innere Drahtgewebe 123 des Stützelements 122 besteht zum Beispiel aus Drähten mit einem etwa 0,5 mm bis 1 mm betragenden Durchmesser und hat eine zum Beispiel ungefähr 5 mm bis 10 mm betragende, lichte Maschenweite. Das äussere Drahtgewebe 124 des Stützelements 122 besteht aus beispielsweise etwa 0,3 mm bis 0,5 mm dicken Drähten und hat eine lichte Maschenweite von beispielsweise ungefähr 1 mm bis 3 mm. Die lichte Weite der Gasdurchlasslöcher des Stützelements ist gleich der lichten Maschenweite des äusseren, feineren Drahtgewebes 124. Das Filtrationselement 125 ist durch ein Drahtgewebe gebildet dessen Drähte zum Beispiel Durchmesser von 0,01 mm bis 0,5 mm haben und dessen lichte Maschenweite zum Beispiel 0,01 mm bis 0,5 mm beträgt. Das Filtrationselement 125 ist vorzugsweise derart ausgebildet, dass die feinsten Gasdurchlasslöcher bei der Aussenfläche des Filtrationselements angeordnet sind so dass der Staub bei der Verwendung des Filters 19 mindestens zum grössten Teil und praktisch vollständig bei der die äusserste Begrenzung des Mantels 121 bildenden Aussenfläche des Filtrationselements abgeschieden wird. Die drei Drahtgewebe bestehen aus rostfreiem Stahl. Die zu ein und demselben Drahtgewebe gehörenden Drähte sowie auch die zu verschiedenen Drahtgeweben gehörenden Drähte sind bei den Berührungsstellen, bei denen sie einander kreuzen sowie berühren, fest sowie unlösbar miteinander verbunden, nämlich miteinander versintert.

Das Stützelement 122 und das Filtrationselement 125 des Mantels 121 sind am oberen Ende des letzteren entlang ihrem ganzen Umfang mit einem metallischen, nämlich aus rostfreiem Stahl bestehenden Ring 127 verschweisst oder eventuell verlötet. Dieser ist für jeden Stift 115 mit einem radialen, bei seinem inneren Rand in ihn eindringenden Einschnitt 127a versehen. Die Stifte 115 und die Einschnitte 127a bilden zusammen Bajonettverschluss ähnliche Befestigungsmittel und sind derart ausgebildet, dass der Ring 127 zum Befestigen des Filters 19 am Behälter - bzw. Wandungsteil 17 derart vertikal nach oben bewegt werden kann, dass jeder Stift 115 einen Einschnitt 127a passiert. Danach kann man das Filter ein wenig um seine vertikale Achse verschwenken, so dass die Stifte an der unteren Stirnfläche des Rings 127 angreifen und das Filter provisorisch lose und mit axialem Spiel am Support 113 halten.

Der Mantel 121 ist an seinem dem Ring 127 abgewandten, unteren Ende entlang seinem ganzen Umfang mit einer metallischen, beispielsweise aus rostfreiem Stahl bestehenden Scheibe 129 verschweisst oder eventuell verlötet. Die Scheibe 129 besitzt im Zentrum ein durchgehendes, zur Filterachse 120 koaxiales Loch 129a und auf der oberen Stirnseite eine von der Filterachse 120 sowie vom Loch 129a weg leicht konisch nach unten geneigte Fläche 129b. Eine zur Filterachse 120 koaxiale Hülse 130 steckt mit ihrem oberen Ende im Loch 129a der Scheibe 129, ist mit dieser verschweisst oder eventuell verlötet, ragt von dieser weg nach unten und hat ein durchgehendes axiales Loch. Eine sich nach unten konisch verjüngende, kompakte, d.h. lochfreie, metallische Endwand 131 ist bei ihrem oberen Rand mit der Scheibe 129 und bei ihrem unteren Rand mit der Hülse 130 verschweisst oder verlötet. Ein längliches Befestigungselement 132 besitzt einen die Hülse 130 durchdringenden zylindrischen Abschnitt, oberhalb der Scheibe 129 einen etwas dünneren, zylindrischen Endabschnitt und am unteren, aus der Hülse 130 und dem eigentlichen Filter herausragenden Ende einen an der radialen Endfläche der Hülse anliegenden Kragen 132a sowie einen Kopf mit nicht-rotationssymmetrischen Flächen zum Angreifen mit einem Schlüssel oder sonstigen Werkzeug. Das Befestigungselement 132 besitzt ein in seine obere Endfläche mündendes, axiales Sackloch 132b mit einem Innengewinde 132c, das mit dem Aussengewinde 119c des Halters 119 verschraubt ist. Der Halter 119 und das Befestigungselement 132 bilden zusammen Befestigungsmittel, verbinden das Filter 19 durch das Loch 129a der Scheibe 129 hindurch lösbar mit dem Support 113 und drücken den Ring 127 des Filters 19 gegen eine radiale, ebene Ringfläche des Supports 113. Der Support 113 und der Ring 127 sind mit einer beispielsweise in einer Ringnut des letzteren gehaltenen Dichtung 133 gegeneinander abgedichtet. Ferner ist das Befestigungselement 132 mit einer in einer Ringnut der Hülse 130 gehaltenen Dichtung 134 gegen die Hülse 130 abgedichtet. Ein verschiebbar in einem axialen Sackloch des Supports 113 geführter, metallischer, elektrisch leitender Kontaktstift 135 wird durch eine im gleichen Sackloch angeordnete Feder 136 an den Ring 127 gedrückt und verbindet das Filter elektrisch leitend mit dem Wandungsteil 17 und über diesen mit Erde. Der Mantel 121, der Ring 127 und die Scheibe 129 begrenzen zusammen einen hohlen Filter-Innenraum 137 des Filters 19. Dabei steht die den Filter-Innenraum 137 umschliessende Innenfläche des Stützelements 122 des Mantels 121 überall in Abstand vom Halter 119.

Das Stützelement 122 ist formfest. Das Filtrationselement 125 ist eventuell für sich allein ziemlich flexibel. Da es jedoch im wesentlichen rotationssymmetrisch zur Filterachse, nämlich zylindrisch sowie frei von Falten und Wellen ist, im wesentlichen mit seiner ganzen Innenfläche an der Aussenfläche des Stützelements anliegt und zudem bei allen Berührungsstellen mit diesem versintert ist, wird das Filtrationselement vom Stützelement abgestützt, so dass auch das Filtrationselement und damit der ganze Mantel im wesentlichen formfest und formbeständig ist. Die Aussenfläche und die Innenfläche des Stützelements und auch die von der Aussenfläche des Filtrationselements 125 gebildete Aussenfläche des ganzen Mantels sind im wesentlichen - d.h. abgesehen von den um einander herum gebogenen Drähten der Drahtgewebe - zylindrisch und im Querschnitt kreisförmig. Weil das Filtrationselement 125 im wesentlichen mit seiner ganzen Innenfläche und insbesondere auch an beiden Enden entlang seinem ganzen Umfang am Stützelement 122 anliegt, weil das Stützelement 122 bei seinen Enden entlang seinem ganzen Umfang am Ring 127 bzw. an der Scheibe 129 anliegt und weil das Stützelement sowie das Filtrationselement entlang dem ganzen Umfang mit dem Ring 127 bzw. der Scheibe 129 verschweisst oder verlötet sind, ergibt sich eine stabile und dauerhafte Verbindung des Stützelements sowie des Filtrationselements mit dem Ring 127 und der Scheibe 129. Das axiale Loch 113a des Supports 113 und das mit diesem fluchtende, axiale Loch des Ringflansches 117 bilden zusammen einen ersten Durchgang 138, der den Filter-Innenraum 137 durch den inneren Wandungsteil 17 hindurch mit dem Reingas-Raum 30 verbindet und mit der dem betreffenden Filter 19 zugeordneten Verschlussvorrichtung 21 wahlweise verschlossen und freigegeben werden kann.

Die dem in der Fig. 3 gezeichneten Filter zugeordnete, Gas-Reinigungsvorrichtung 20 sowie deren Verschlussvorrichtung 21 sind ebenfalls in der Fig. 3 ersichtlich und besitzt eine zur Filterachse 120 koaxiale Hülse 141. Diese besitzt einen zylindrischen Mantel 142 und ein scheibenförmiges Abschlusselement 143, das am oberen, dem Filter 19 abgewandten Ende des Mantels 142 fest und dicht mit diesem verbunden ist. Der Mantel 142 und das Abschlusselement 143 bestehen zum Beispiel aus separaten, metallischen, miteinander verschweissten Teilen. Drei um die Filterachse herum verteilte L-förmige Haltestäbe 145 haben horizontale, am Abschlusselement 143 befestigte Schenkel und vertikale, am Ringflansch 117 befestigte Schenkel. Der Ringflansch 117 dient also sowohl zum Befestigen des Filters 19 als auch der Gas-Reinigungsvorrichtung 20. Das untere Ende des Mantels 142 ist offen und steht in Abstand vom Ringflansch 117.

Der zur Filterachse 120 koaxiale Reinigungsgas-Einlass 22 der in der Fig. 3 ersichtlichen Gas-Reinigungsvorrichtung 20 ist mit einer nicht gezeichneten Leitung der Reinigungsgas-Zufuhrmittel 95 verbunden und besitzt als Hauptbestandteil ein kurzes Rohr 148, das die Hülse 141 durchdringt, oben sowie unten aus dieser herausragt und mit seinem unteren Ende in das zentrale Loch des Ringflansches 117 hineinragt. Das Rohr 148 hat eine abgestufte Aussenfläche mit zwei zylindrischen Abschnitten sowie eine an der unteren, radialen Fläche des Abschlusselements 143 anliegende Schulterfläche, durchdringt ein Loch des Abschlusselements 143 und ist dicht am letzteren befestigt, beispielsweise angeschweisst. Der Aussendurchmesser des in den Ringflansch 117 hineinragenden Abschnitts des Rohrs ist wesentlich kleiner als der Innendurchmesser des Ringflanschs 117. Der in den ersten Durchgang 138 hineinragende Endabschnitt des Reinigungsgas-Einlasses 22 ist daher von einem ringförmigen freien Bereich des ersten Durchgangs umschlossen. Das Rohr hat ein axiales zylindrisches Durchgangsloch und unterhalb des Abschlusselements 143 sowie nahe bei diesem mindestens ein radiales Loch 148a und vorzugsweise mehrere entlang dem Umfang des Rohrs verteilte Löcher 148a. Der untere Endabschnitt des axialen Durchgangslochs des Rohrs 148 ist mit einem Innengewinde versehen, in das eine hülsenförmige Drossel 149 mit einem axialen Durchgangsloch lösbar eingeschraubt ist. Die axialen Durchgangslöcher des Rohrs 148 und der Drossel 149 des Reinigungsgas-Einlasses 22 bilden zusammen einen zweiten axialen Durchgang 151. Der Durchgang 151 hat eine durch das Durchgangsloch der Drossel 149 gebildete Verengung 152, die sich zwischen den Löchern 148a und dem in den ersten Durchgang 138 mündenden Ende des zweiten Durchgangs 151 befindet.

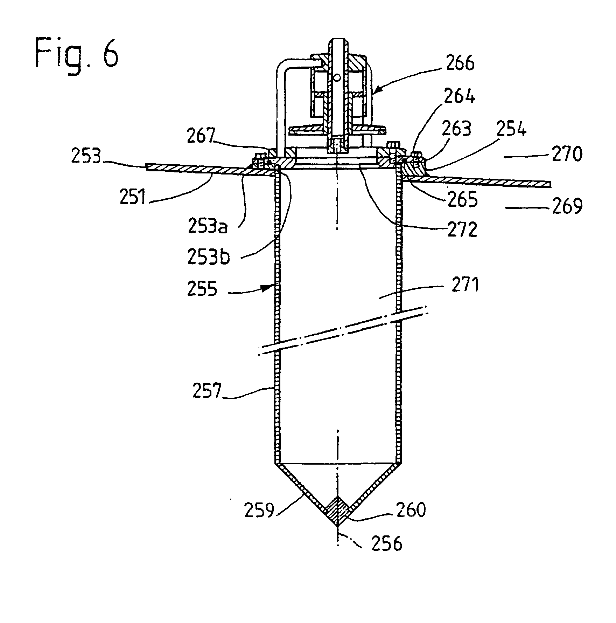

Ein Verschlussorgan 155 besitzt eine das Rohr 148 umschliessende, verschiebbar von diesem geführte, hohle Stange 156 und eine am unteren Ende von dieser befestigte, zum Beispiel metallische Scheibe 157. Eine ringförmige, elastisch deformierbare Dichtung 158 ist in der Nähe des Randes der Scheibe 157 der unteren Fläche von dieser befestigt. Die Durchmesser der Scheibe 157 und der Dichtung 158 sind ein wenig grösser als der Durchmesser des zentralen Lochs des Ringflansches 117. Die Scheibe 157 und die Dichtung 158 stehen in der in der Fig. 6 gezeichneten Betriebs-Stellung des Verschlussorgans 155 in Abstand vom Ringflansch 117. Das Verschlussorgan 155 kann in noch näher beschriebener Weise in eine Schliess-Stellung verschoben werden, in der die Scheibe 157 oder - genauer gesagt - die an dieser befestigte Dichtung 158 auf einer auf der oberen Stirnseite des Ringflansches 117 vorhandenen Ringfläche von diesem aufliegt. Der Ringflansch 117 bildet also auch einen Ventilsitz. Ein aus einer ringförmigen, metallischen Scheibe bestehender Kolben 159 ist dicht am oberen Ende der hohlen Stange 156 befestigt, zum Beispiel angeschweisst. Der ringförmige Kolben 159 befindet sich in dem zwischen dem Mantel 142 und dem Rohr 148 vorhandenen, im Querschnitt ringförmigen Innenraum 161 der Hülse 141. Der Innenraum 161 hat einen zwischen dem Abschlusselement 143 und dem Kolben 159 vorhandenen Innenraumbereich 162, in den die Löcher 148a münden. Der Kolben 159 und die hohle Stange 156 haben auf dem Rohr 148 bzw. im Mantel 142 höchstens ein kleines radiales Spiel. Dabei ist zwischen der Innenfläche des Mantels 142 und dem Kolben 159 vorzugsweise ein sehr schmaler, zum Beispiel höchstens oder ungefähr 1 mm breiter Ringspalt vorhanden. Der Kolben 159 und die hohle Stange 156 sind leicht verschiebbar und schliessen den Innenraumbereich 162 nicht vollkommen dicht, aber doch mehr oder weniger (dicht) gegen den freien Bereich des Reinigungs-Raums 30 ab. Übrigens könnten nötigenfalls noch Dichtungen vorgesehen werden, um den Kolben 159 und die hohle Stange 156 gegen den Mantel 142 bzw. das Rohr 148 abzudichten.

Die Filter 63, Gas-Reinigungsvorrichtungen 64 und Nass-Reinigungsvorrichtungen 67, 68 des Nachentstaubers 51 sind beispielsweise gleich oder ähnlich ausgebildet wie die im Gut-Behälter 3 angeordneten Filter 19 bzw. Gas-Reinigungsvorrichtungen 20 bzw. Nass-Reinigungsvorrichtungen 23, 25.

Der metallische Mantel 121 und die anderen metallischen Teile jedes Filters und jeder Gas-Reinigungsvorrichtung sind bis zu hohen Temperaturen hitzebeständig und bleiben selbstverständlich auch bei tiefen Temperaturen zäh sowie kältebeständig. Die Dichtungen 133, 134, 158 und die allenfalls sonst noch vorhandenen Dichtungen sind ebenfalls derart ausgebildet, dass sie und damit die ganzen Filter sowie die ganzen Gas-Reinigungsvorrichtungen bis zu Temperaturen von mindestens 200° C hitzebeständig und auch bei Temperaturen unter 0° C noch zäh, kältebeständig und verwendbar sind.

Die inneren Wandungsteile 17 und 61 sind in der Fig. 1 zur Vereinfachung eben und horizontal gezeichnet. Die inneren Wandungsteile 17, 61 und ihre an die Reingas-Räume 30, 71 angrenzenden, oberen Flächen sind jedoch in Wirklichkeit nicht genau eben und horizontal sondern - wie auch die an die Reingas-Räume angrenzenden, oberen Flächen der Teile der Gas-Reinigungsvorrichtungen 20, 64, der zu diesen gehörenden Verschlussvorrichtungen 21, 65 und der Nass-Reinigungsvorrichtungen 23, 25, 67, 68 - im wesentlichen derart mindestens leicht gegen horizontale Ebenen geneigt, beispielsweise mindestens stellenweise eben sowie geneigt und/oder konisch und/oder gewölbt, dass möglicherweise bei einer Nass-Reinigung auf die genannten, oberen Flächen gelangende Reinigungsflüssigkeit schnell zu den Flüssigkeitsauslässen abfliesst und durch diese abgeleitet werden kann. Die inneren Wandungsteile 17 und 61 sind zum Beispiel zur Mitte hin mindestens stellenweise leicht nach oben gewölbt und ferner im allgemeinen ein wenig geneigt, so dass die von den Rändern der inneren Wandungsteile definierten Ebenen mit horizontalen Ebenen einen zum Beispiel ungefähr 2° oder eventuell bis etwa 5° betragenden Neigungswinkel bilden und sich die tiefsten Stellen der oberen Flächen der inneren Wandungsteile 17, 61 beim Flüssigkeitsauslass 48 bzw. 78 befinden. Die den Hauptbestandteil des inneren Wandungsteils 17 bildende Platte 111 und die entsprechende Platte des inneren Wandungsteils 61 sind dementsprechend ebenfalls mindestens stellenweise leicht gewölbt und im allgemeinen ein wenig geneigt, wie es für den in der Figur 3 ersichtlichen Abschnitt der Platte 111 angedeutet ist. Die Formen und Neigungswinkel der ein Filter tragenden Plattenabschnitte können bei den verschiedenen Filtern verschieden sein. Die oberen Flächen der in der Figur 3 ersichtlichen Teile 117, 143, 155 der Verschlussvorrichtung 21 der Gas-Reinigungsvorrichtung 20 sind zum Beispiel konisch und nach aussen gegen horizontale Ebenen mit Neigungswinkeln von ungefähr oder mindestens 2° abwärts geneigt. Die Filterachsen der Filter 19, 63 sind trotzdem alle vertikal und parallel zu den Behälterachsen 4 bzw. 54. Die Achsen der Nass-Reinigungsvorrichtungen 23, 25, 66, 68 sind ungefähr oder genau senkrecht zu einer ebenen Fläche, die sich tangential an den die jeweilige Nass-Reinigungsvorrichtung tragenden Abschnitt eines inneren Wandungsteils anschmiegt.

Nun wird der Betrieb der Wirbelschicht-Einrichtung 1 beschrieben. Bei der Betriebsaufnahme wird zuerst eine Charge des etwa zur Bildung eines Arzneimittels dienenden, teilchenförmigen Gutes 99 - beispielsweise durch einen nicht gezeichneten, verschliessbaren Guteinlass hindurch - in den Wirbel- und Rohgas-Raum 29 eingebracht.

Beim nachfolgend zuerst beschriebenen "normalen" Betrieb der Einrichtung zum Behandeln des teilchenförmigen Gutes 99 wird mit den Gasleitmitteln 81 aus filtrierter und aufbereiteter Luft bestehendes Prozessgas von unten nach oben durch den Gut- und Wirbelschicht-Behälter 3 sowie den Nachentstauber-Behälter 53 hindurch geleitet. Das teilchenförmige Gut 99 wird dadurch verwirbelt und behandelt. Dabei wird zum Beispiel zuerst mit der Sprühvorrichtung 44 eine Flüssigkeit auf die Teilchen des Gutes aufgesprüht, um diese zu grösseren Teilchen zu agglomerieren und/oder mit Uberzügen zu versehen. Anschliessend wird das Gut 99 ohne Besprühung weiter verwirbelt sowie getrocknet. Das Gut kann jedoch auch ohne vorherige Besprühung lediglich getrocknet werden.

Beim normalen Betrieb eines Filters wird diesem kein Reinigungsgas zugeführt. Das Verschlussorgan 155 der Verschlussvorrichtung 21 wird dann durch die von der Saugvorrichtung 93 durch den Behälter 3 hindurch gesaugte Luft angehoben und gelangt in die in der Fig. 3 gezeichnete Freigabe-Stellung. Beim normalen Betrieb von Filtern strömt die Luft im Gut-Behälter 3 aus dem Rohgas-Raum 29 durch die Mäntel 121 der Filter 19 in die Filter-Innenräume 137, von diesen durch die Durchgänge 138 in den für alle Filter 19 gemeinsamen Reingas-Raum 30. Im Nachentstauber 51 strömt die Luft analog vom Rohgas-Raum 70 durch die Mäntel der Filter 63 in die in diesen vorhandenen Filter-Innenräume und von diesen in den Reingas-Raum 71.

Die das Prozessgas bildende, von der Wirbelschicht nach oben zu den Filtern 19 strömende Luft enthält normalerweise Staub, beispielsweise Abriebmaterial vom teilchenförmigen Gut und eventuell auch Partikel von Feststoffen, die in der zersprühten Flüssigkeit gelöst oder dispergiert waren. Die Luft wird beim normalen Betrieb von Filtern 19 durch deren Mäntel 121 filtriert, wobei der Staub bei den sich aussen an den Mänteln 121 befindenden Filtrationselementen 125 an deren Aussenflächen abgeschieden wird. Das in den Nachentstauber 51 gelangende Prozessgas kann ebenfalls noch ein wenig feinen Staub enthalten, der dann von den Filtern 63 des Nachentstaubers abgeschieden wird.

Der von den Filtern 19 und 63 aus der Luft abgeschiedene und an den Aussenflächen der Mäntel 121 der Filter anhaftende Staub reduziert die Durchlässigkeit der Filter. Jedes Filter 19, 63 wird daher während der Verwirbelung des Gutes 99 von Zeit zu Zeit mit Reinigungsgas gereinigt. Dieses besteht zum Beispiel aus Luft, die aus der Umgebung angesaugt, filtriert und vom Kompressor der Zufuhrmittel 95 komprimiert wurde, so dass der Druck grösser - vorzugsweise mindestens 100 kPa und beispielsweise 200 kPa bis 1000 kPa grösser - als der Umgebungsluftdruck und als der normalerweise ein wenig unter dem Umgebungsluftdruck liegende Druck in den Rohgas-Räumen 29 bzw. 70 ist. Wenn die Reinigungsgas-Zufuhrmittel 95 beispielsweise dem in der Fig. 3 ersichtlichen Reinigungsgas-Einlass 22 als Reinigungsgas dienende Druckluft zuführen, strömt ein Teil und beispielsweise der grösste Teil von dieser durch den Durchgang 151 des Reinigungsgas-Einlasses 22 in den vom Support 113 sowie Ringflansch 117 begrenzten Durchgang 138. Da sich das Verschlussorgan 155 beim Beginn der Zufuhr von Druckluft noch in der Freigabe-Stellung befindet, strömt die durch den Einlass 22 in den Durchgang 138 strömende Luft zum Teil in den Reingas-Raum 30 und zum Teil in den Filter-Innenraum 137. Wenn Druckluft durch den Durchgang 151 des Reinigungsgas-Einlasses in den Durchgang 138 strömt, entsteht im Durchgang 151 und insbesondere in dessen Verengung 152 ein Druckgefälle. Es strömt daher auch Druckluft durch die Löcher 148a des Einlasses'in den Innenraumbereich 162 der Hülse 141. Dabei wird der Druck im Innenraumbereich 162 soviel grösser als der Druck im restlichen, mit dem Reingas-Raum 30 verbundenen Teil des Innenraums 161 der Hülse 141, dass der ringförmige Kolben 159 nach unten verschoben wird und das Verschlussorgan 155 in die Schliess-Stellung verschiebt und gegen die vom Ringflansch 117 gebildete Sitzfläche drückt. Der Kolben hält nun das Verschlussorgan 155 in der Schliess-Stellung, so lange dem Reinigungsgas-Einlass 22 Druckluft zugeführt wird. Diese Druckluft strömt dann - abgesehen von einem allfälligen kleinen Leckverlust beim Kolben 159 und Verschlussorgan 155 - durch die Durchgänge 151, 138 in den Filter-Innenraum 137 und durch den gasdurchlässigen Mantel 121 des Filters 19 in den Rohgas-Raum 29. Dabei bläst die als Reinigungsgas dienende Druckluft den aussen am Mantel 121 des Filters 19 haftenden Staub praktisch vollständig vom Filter 19 weg in den Wirbel- und Rohgas-Raum 29. Da das Verschlussorgan 155 den Durchgang 138 während dieses Reinigungsvorgangs schliesst und da der Druck der als Reinigungsgas dienenden Druckluft grösser ist als der als Prozessgas durch den Wirbel- und Rohgas-Raum gesaugte Luft, strömt während der Zufuhr von Reinigungsgas zu einem Filter kein oder mindestens praktisch kein Prozessgas aus dem Rohgas-Raum in das Filter hinein. Der vom Filter weggeblasene Staub kann daher mindestens zum Teil in die Wirbelschicht hinabsinken und - mindestens wenn die Teilchen des Gutes 99 noch feucht sind - an diesen festhaften. Diejenigen Filter 19, denen keine als Reinigungsgas dienende Druckluft zugeführt wird, filtrieren während der Reinigung 5 eines Filters Prozessgas.

Wenn die Zufuhr von Reinigungsgas zu einem Filter aufhört, wird dann das Verschlussorgan 155 infolge der Saugwirkung der Saugvorrichtung wieder vom Ringflansch 117 abgehoben und in die Freigabe-Stellung verschoben. Wenn dem Reinigungsgas-Einlass 22 eines Filters keine Druckluft zugeführt wird, verhält sich die dem betreffenden Filter zugeordnete Verschlussvorrichtung 21 also wie ein Rückschlagventil.

5 Die Reinigungsgas-Zufuhrmittel 95 erzeugen für die Reinigung der Filter eine Folge von Reinigungsgas-Impulsen und führen zum Beispiel jedem der verschiedenen Filter 19 zyklisch abwechselnd einen Reinigungsgas-Impuls zu. Dies geschieht im wesentlichen während der ganzen Zeit, während der Prozessgas durch die Behälter 3 und 53 hindurchgeleitet wird. Auf diese Weise werden alle Filter 19 einzeln zyklisch abwechselnd ausgeblasen. Eventuell kann statt dessen gleichzeitig einer Gruppe von Filtern 19 ein Reinigungsgas-Impuls zugeführt werden. Es soll jedoch nie allen Filtern 19 gleichzeitig Reinigungsgas zugeführt werden, so dass beim Ausblasen von Filtern 19 immer noch andere Filter 19 zum Filtrieren von Prozessgas verfügbar sind. Die Zufuhrmittel 95 besitzen vorzugsweise Einstellmittel, mit denen die Längen bzw. Zeitdauern der einzelnen Impulse von ungefähr 0,5 s bis ungefähr 5 s und die zeitlichen Abstände zwischen aufeinanderfolgenden Impulsen von ungefähr 0,5 s bis 10 s oder bis 100 s einstellbar sind.

Die Filter 63 des Nachentstaubers 51 können in analoger Weise abwechselnd einzeln oder gruppenweise mit Reinigungsgas gereinigt werden. Da die zum Nachentstauber strömende Luft nur noch wenig Staub enthält, müssen die Filter des Nachentstaubers normalerweise weniger häufig gereinigt zu werden als die im Gut-Behälter vorhandenen Filter. Der von den Filtern 63 weggeblasene Staub kann dann im Bodenteil 56 des Nachentstaubers gesammelt und von Zeit zu Zeit durch den Auslass 74 aus dem Nachentstauber-Behälter 53 herausgelassen werden.

Bei der Herstellung von Wirbelschicht-Einrichtungen kann man Drosseln 149 herstellen, die Verengungen 152 mit unterschiedlichen lichten Weiten bilden. Da die Drosseln 149 lösbar in die Rohre 148 eingeschraubt sind, können sie einfach und schnell ausgewechselt werden. Man kann daher das von einer Drossel 149 bzw. Verengung 152 beim Zuführen von Druckluft zu einem Reinigungsgas-Einlass 22 erzeugte Druckgefälle beim Herstellen einer Einrichtung leicht an die vorgesehenen Einrichtungsabmessungen sowie an die vorgesehenen Betriebsparameter anpassen und nötigenfalls nachträglich ändern.

Wenn die Behandlung einer Charge des teilchenförmigen Gutes 99 beendet ist, wird die Saugvorrichtung 92 ausgeschaltet, die Förderung von Prozessgas beendet und das Gut 99 aus dem Wirbelschicht-Behälter 3 entnommen.

Nach der Beendigung des normalen Betriebs und nach der Entleerung des Gut-Behälters 3 können die Filter 19, 63 und sonstige Teile einer Nass-Reinigung unterzogen bzw. gewaschen werden. Die Reinigungsflüssigkeits-Zufuhrmittel 96 können wahlweise verschiedenen Nass-Reinigungsvorrichtungen 23, 25, 67, 68 eine Reinigungsflüssigkeit zuführen, deren Druck zum Beispiel 200 kPa bis 600 kPa und deren Temperatur mehr als 0° C und beispielsweise 20° C bis 100° C oder eventuell bis 150° C beträgt. Wenn die Zufuhrmittel 96 mindestens einer der Nass-Reinigungsvorrichtungen 23, 25 vorübergehend eine unter Druck stehende Reinigungsflüssigkeit zuführen, wird das Sprühorgan der bzw. jeder betreffenden Reinigungsvorrichtung in den Rohgas-Raum 29 hinein verschoben und zersprüht Reinigungsflüssigkeit. Die letztere trifft zum Teil auf die Mäntel 121 von Filtern 19 auf, welche sich in der Nähe der betreffenden Nass-Reinigungsvorrichtung befinden. Beim Besprühen der Filter wird diesen von den Reinigungsgas-Zufuhrmitteln 95 impulsweise zyklisch abwechselnd über die Gas-Reinigungsvorrichtungen 20, 64 Reinigungsgas, d.h. Druckluft zugeführt, so dass die Filter intermittierend ausgeblasen werden. Wenn die Besprühung der Filter beendet ist, werden die Filter ebenfalls noch während einer gewissen Zeitdauer intermittierend oder kontinuierlich mit Reinigungsgas ausgeblasen.

Die Filter 63 des Nachentstaubers 51 können in analoger Weise einer Nass-Reinigung unterzogen werden wie die Filter im Wirbelschicht-Behälter.

Die Filter 19, 63 und insbesondere deren metallische Mäntel sind stabil, beständig gegen hohe sowie tiefe Temperaturen und dauerhaft. Die Filter haben daher eine viel höhere Lebensdauer als bekannte Filter mit Filtrationselementen aus Papier oder textilen Materialien. Die stabile Ausbildung der Mäntel ermöglicht ferner, das Reinigungsgas und die Reinigungsflüssigkeit bei den Reinigungen mit relativ grossen, zu einer guten Reinigung beitragenden Drücken zuzuführen, ohne dass die Filter durch das Reinigungsgas bzw. die Reinigungsflüssigkeit beschädigt werden.

Da die Mäntel 121 der Filter 19 und 63 durch die Filtrationselemente 125 gebildete, zylindrische, im Querschnitt kreisförmige Aussenflächen ohne Wellen oder Falten haben und derart ausgebildet sind, dass der Staub beim normalen Betrieb der Wirbelschicht-Einrichtung an den Aussenflächen der Mäntel der Filter abgelagert wird, können die Filter sowohl beim trockenen Reinigen mit Reinigungsgas als auch beim Reinigen mit einer Reinigungsflüssigkeit überall gut gereinigt werden. Da die Drähte der verschiedenen Drahtgewebe des Mantels 121 eines Filters bei den Kreuzungsstellen miteinander versintert sind, kann kein Staub zwischen einander kreuzende Drähte gelangen. Dies trägt beim Reinigen der Filter ebenfalls dazu bei, eine gute Reinigung zu ermöglichen.

Wegen der guten Reinigbarkeit und der Dauerhaftigkeit der Filter müssen diese höchstens selten für eine Reinigung oder eine Revision oder eine Reparatur ausgebaut werden. Dies ist insbesondere beim Verarbeiten toxischer oder sonstiger gesundheitsgefährdender Stoffe vorteilhaft, weil die mit einem Ausbau der Filter verbundene Gefahr einer Kontamination der Umgebung und des Bedienungspersonals nahezu vollständig vermieden wird. Die Reinigung der Filter kann ferner weitgehend automatisiert werden, was zu einer gleichbleibenden Reinheit und Qualität der hergestellte Produkte sowie zu einem wirtschaftlichen Betrieb der Einrichtung beiträgt.

Da die Mäntel der Filter und insbesondere auch deren Filtrationselement aus einem metallischen Material bestehen und da die Mäntel sehr stabil ausgebildet sind, wobei insbesondere das aus einem sehr dünnen Drahtgewebe bestehende Filtrationselement 125 im wesentlichen mit seiner ganzen Innenfläche am Stützelement 122 anliegt sowie mit diesem verbunden ist, kann beim Betrieb der Einrichtung zudem weitgehend gewährleistet werden, dass das Filtrationselement bei einer allfälligen Explosion im Rohgas-Raum weitgehend intakt bleibt und dass die Explosion nicht in den Reingas-Raum durchschlägt.

Die beschriebene, lösbare Befestigung der Filter ermöglicht, diese beim Zusammenbauen einer Wirbelschicht-Einrichtung 1 schnell und einfach zu montieren. Desgleichen kann man ein Filter nötigenfalls nachträglich mit geringem Zeitaufwand vorübergehend aus dem Behälter 3 bzw. 53 ausbauen sowie reinigen und/oder revidieren oder auswechseln, falls dies trotz der guten Reinigbarkeit und hohen Lebensdauer der Filter in seltenen Fällen doch nötig ist. Beim Ein oder Ausbauen eines Filters ist es insbesondere vorteilhaft, dass zur Befestigung eines Filters nur ein einziges Befestigungselement 132 nötig ist und dass dieses sich bei montiertem Filter bei dessen unterem Ende befindet und daher vom Rohgas- Raum und von unten her gut zugänglich ist.

In der Fig. 6 ist ein innerer Behälter- bzw. Wandungsteil 251 ersichtlich, der eine Trennwand eines Wirbelschicht- oder Nachentstauber-Behälters bildet und eine Platte 253 aufweist. Diese hat unten eine Fläche 253a und mindestens ein durchgehendes, zylindrisches Loch 253b. Der Wandungsteil 251 ist nötigenfalls bei jedem Loch 253b mit einem auf der oberen Fläche der Platte 253 aufliegenden, fest und dicht mit dieser verbundenen, beispielsweise angeschweissten Verstärkungsring 254 versehen, dessen Loch mit dem Loch 253b fluchtet.

Bei dem bzw. jedem Loch 253b ist ein Filter 255 am Wandungsteil 251 befestigt. Das Filter 255 definiert eine vertikale Filterachse 256, ist im wesentlichen zu dieser rotationssymmetrisch und besitzt einen zylindrischen, im Querschnitt kreisförmigen, formfesten, gasdurchlässigen Mantel 257, der ähnlich wie der Mantel 121 ausgebildet ist und ein Stützelement sowie ein Filtrationselement aufweist. Das Filter hat eine mit dem unteren Ende des Mantels 257 verbundene, beispielsweise verschweisste oder eventuell verlötete, sich nach unten konisch verjüngende Endwand 259. Diese ist im Gegensatz zur Endwand 131 der Filter 19 gasdurchlässig. Die Endwand 131 ist analog zum Mantel 257 aufgebaut und besteht aus einem Stützelement und einem an dessen Aussenfläche anliegenden Filtrationselement, wobei das Stützelement und das Filtrationselement in allen horizontalen Querschnittsebenen kreisförmig sind. Das Stützelement der Endwand 259 besteht aus mindestens einem Drahtgewebe und vorzugsweise wie das Stützelement 122 aus einem inneren, gröberen und einem äusseren, feineren Drahtgewebe. Das Filtrationselement der Endwand 259 besteht dann aus einem noch feineren Drahtgewebe als das innere Drahtgewebe des Stützelements der Endwand 259. Das Filtrationselement hat dementsprechend engere Gasdurchlasslöcher als das Stützelement. Die Drähte der verschiedenen Drahtgewebe sind bei den Kreuzungsstellen wie beim Mantel 121 miteinander versintert. Am unteren, engeren Ende der konischen Endwand 259 ist ein fest und dicht mit dieser verbundenes, beispielsweise verschweisstes oder eventuell verlötetes, gasdichtes Abschlusselement 260 vorhanden. Das Filter 255 besitzt ferner einen Ring 263 mit einem von der oberen Seite des inneren Wandungsteils 251 her in das vom Loch des Verstärkungsrings 254 und vom Loch 253b der Platte 253 gebildete Loch des Wandungsteils 251 hinein und eventuell durch dieses hindurch ragenden Abschnitt, an dem das obere Ende des Mantels 257 entlang von dessen ganzem Umfang befestigt, zum Beispiel angeschweisst oder eventuell angelötet ist. Der Ring 263 hat einen auf der oberen Seite des Verstärkungsrings 254 aufliegenden Kragen und ist mit entlang von dessen Umfang verteilten Befestigungselementen, nämlich in Gewindebohrungen des Verstärkungsrings eingeschraubten Schrauben oder Gewindebolzen 264 lösbar am Behälter- bzw. Wandungsteil 251 befestigt sowie mit einer Dichtung 265 gegen den letzteren abgedichtet.

Ferner ist noch eine in der Fig. 6 ersichtliche Gas-Reinigungsvorrichtung 266 vorhanden. Diese besitzt einen lösbar am Ring 263 und damit am Wandungsteil 251 befestigten Ringflansch 267. Die Gas-Reinigungsvorrichtung 266 ist im übrigen ähnlich ausgebildet wie die Gas-Reinigungsvorrichtung 20.

Der Wandungsteil 251 grenzt mit der Fläche 253a der Platte 253 an einen Rohgas-Raum 269 an und trennt diesen von dem sich oberhalb des Wandungsteils 251 befindenden Reingas-Raum 270. Das Filter 255 umschliesst einen Filter-Innenraum 271. Dieser ist durch einen mindestens zum Teil vom Ring 263 und vom Ringflansch 267 begrenzten, ersten Durchgang 272 mit dem Reingas-Raum 270 verbunden. Die Gas-Reinigungsvorrichtung 266 hat einen Reinigungsgas-Einlass mit einem in den ersten Durchgang 272 mündenden, zweiten Durchgang und eine Verschlussvorrichtung, mit welcher der Durchgang 272 abgeschlossen und freigegeben werden kann.

Während die Filter 19 von der unteren Seite des Wandungsteils 17 her an diesem angebracht werden, wird das bzw. jedes Filter 255 bei der Montage von der oberen Seite des Wandungsteils in dessen Loch eingeführt. Bei der Verwendung des Filters 255 strömt sowohl durch den Mantel 257 als auch durch die Endwand 259 Prozessgas vom Rohgas-Raum 269 in den Filter-Innenraum 271. Im übrigen hat das Filter 255 ähnliche Eigenschaften wie die Filter 19 sowie 63 und wird ähnlich wie diese verwendet.

Die Anzahl der Filter und die Anzahl der zum Reinigen der Filter dienenden Nass-Reinigungsvorrichtungen können kleiner oder grösser sein als bei der in der Fig. 2 gezeichneten Anordnung. Ein Gut-Behälter enthält jedoch vorzugsweise mindestens zwei Filter. Dagegen könnte ein Nachentstauber-Behälter möglicherweise nur ein Filter enthalten.

Die Einrichtung und ihr Betrieb können noch in anderer Hinsicht geändert werden. Zum Beispiel kann man Merkmale der in den Figuren 3 und 6 gezeichneten Filter sowie der zu deren Befestigung dienenden Befestigungsmittel kombinieren. Des weitern kann man beim inneren Behälter- bzw. Wandungsteil 251 den Verstärkungsring 254 eventuell weglassen, wenn die Platte 253 ausreichend dick ist.

Ferner könnten die Reinigungsgas-Einlässe bis in die Filter-Innenräume hineinragen. Zudem könnte jede Verschlussvorrichtung eventuell noch mindestens eine Feder aufweisen, um auf das verschiebbare Verschlussorgan 155 eine gegen den Ringflansch 117 bzw. 267 oder von diesem weggerichtete Kraft auszuüben.

Des weiteren könnte man das oder die Filter, die dem bzw. jedem Filter zugeordnete Gas-Reinigungsvorrichtung und die Nass-Reinigungsvorrichtungen statt an einem sich im Behälter befindenden inneren Wandungsteil an einem zur Aussenwand des Behälters gehörenden Wändungsteil, beispielsweise am Deck-Wandungsteil des Behälters befestigen. Man könnte dann die bzw. jede einem Filter zugeordnete Gas-Reinigungsvorrichtung mit einer an der oberen Seite der Decke befestigten Kappe abdecken, die auch einen dem (betreffenden) Filter zugeordneten Reingas-Raum begrenzt.

Ferner könnte man als Prozessgas und/oder als Reinigungsgas anstelle von Luft ein anderes Gas - beispielsweise Stickstoff - verwenden.

Für weitere Einzelheiten der Einrichtung insbesondere der Nass-Reiniungsvorrichtungen, der Ausbildung und Abdichtung des Siebbodens und der Ausbildung der Fenster sei auf die gleichzeitig unter Beanspruchung der Prioritäten von den Schweizerpatentanmeldungen 3706/95, 3708/95 und 3709/95 eingereichten Patentanmeldungen und die für diese veröffentlichten Publikationen EP-A 0 781 587 bzw. EP-A 0 781 594 bzw. EP-A 0 781 949 verwiesen, deren Inhalt hiermit in die vorliegende Patentanmeldung eingeschlossen wird, soweit sich keine Widersprüche ergeben.

## Patentansprüche

1. Einrichtung zum Entstauben von Gas, mit einem einen Rohgas-Raum (29, 70, 269) begrenzenden Behälter (3, 53), mindestens einem in den Rohgas-Raum (29, 70, 269) hineinragenden Filter (19, 63, 255) und Gasleitmitteln (81), um das Gas vom Rohgas-Raum (29, 70, 269) durch das bzw. die Filter (19, 63, 255) hindurch zu leiten, wobei das bzw. jedes Filter (19, 63, 255) einen Mantel (121, 257) mit einem metallischen, Gasdurchlasslöcher aufweisenden Stützelement (122) und einem dieses umschliessenden, von diesem abgestützten, eine Innenfläche, eine an den Rohgas-Raum (29, 70, 269) angrenzende Aussenfläche sowie Gasdurchlasslöcher aufweisenden Filtrationselement (125) besitzt, wobei die Gasdurchlasslöcher des Filtrationselements (125) kleinere lichte Weiten haben als die Gasdurchlasslöcher des Stützelements (122), **dadurch gekennzeichnet, dass** das Stützelement (122) mindestens ein Drahtgewebe (123, 124) aufweist, dass das Filtrationselement (125) metallisch ist, ein Drahtgewebe aufweist, im Wesentlichen mit seiner ganzen Innenfläche am Stützelement (122) anliegt, von diesem formbeständig gestützt ist und bei Berührungsstellen, bei denen es das bzw. ein Drahtgewebe (123) des Stützelements (122) berührt, mit diesem versintert ist und dass das Filtrationselement (125) frei von Falten und/oder Wellen ist.

2. Einrichtung nach Anspruch 1, **dadurch gekennzeichnet, dass** das bzw. jedes Filter (19, 63, 255) eine Filterachse (120, 256) definiert und dass das Stützelement (122) und Filtrationselement (125) im wesentlichen rotationssymmetrisch zur Filterachse (120, 256) sind.

3. Einrichtung nach Anspruch 1 oder 2, **dadurch gekennzeichnet, dass** das Stützelement (122) und Filtrationselement (125) im wesentlichen zylindrisch sind.

4. Einrichtung nach einem der Ansprüche 1 bis 3, **dadurch gekennzeichnet, dass** alle Drahtgewebe (123, 124) des Mantels (121, 257) aus rostfreiem Stahl bestehen.

5. Einrichtung nach einem der Ansprüche 1 bis 4, **dadurch gekennzeichnet, dass** das Stützelement (122) ein inneres Drahtgewebe (123) und ein bei Berührungsstellen mit diesem versintertes, äusseres Drahtgewebe (124) aufweist, das mit dem Filtrationselement (125) versintert ist sowie eine kleinere Maschenweite hat und aus dünneren Drähten gebildet ist als das innere Drahtgewebe (123).

6. Einrichtung nach einem der Ansprüche 1 bis 5, **dadurch gekennzeichnet, dass** das bzw. jedes Filter (19, 63, 255) an einem Wandungsteil (17, 61, 251) des Behälters (3, 53) befestigt ist und einen Filter-Innenraum (137, 271) begrenzt, der durch einen Durchgang (138, 272) mit einem sich auf dem Rohgas-Raum (29, 70, 269) abgewandten Seite des Wandungsteils (17, 61, 251) befindenden Reingas-Raum (30, 71, 270) verbunden ist, und dass für das bzw. jedes Filter (19, 63, 255) eine Gas-Reinigungsvorrichtung (20, 64, 266) mit einem Reinigungsgas-Einlass (22, 66) und einer Verschlussvorrichtung (21, 65) vorhanden ist, um vorübergehend Reinigungsgas in den Filter-Innenraum (137, 271) zu leiten und um beim Einleiten von Reinigungsgas in den Filter-Innenraum (137,271) den Durchgang (138, 272) zu schliessen.

7. Einrichtung nach Anspruch 6, **dadurch gekennzeichnet, dass** die bzw. jede Gas-Reinigungsvorrichtung (20, 64, 266) einen den Reinigungsgas-Einlass (22, 66) im Querschnitt umschliessender Mantel (142) und einen in diesem verschiebbaren, mit einem Verschlussorgan (155) verbundenen Kolben (159) aufweist, dass der Mantel (142) auf der dem Filter (19, 63, 255) abgewandten Seite des Kolbens (159) durch ein Abschlusselement (143) dicht abgeschlossen ist und dass der Reinigungsgas-Einlass (22, 66) starr mit dem Wandungsteil (17, 61, 251) verbunden ist, den Kolben (159) und das Verschlussorgan (155) durchdringt, einen zweiten, mit dem Filter-Innenraum (137, 271) verbundenen Durchgang (151) umschliesst und mindestens ein Loch (148a) hat, das den zweiten Durchgang (151) mit einem vom Mantel (142) umschlossenen, zwischen dem Abschlusselement (143) und dem Kolben (159) vorhandenen Innenraumbereich (162) verbindet.

8. Einrichtung nach Anspruch 7, **dadurch gekennzeichnet, dass** der zweite Durchgang (151) zwischen dem bzw. jedem Loch (148a) und seinem sich auf der bzw. jedem Loch (148a) abgewandten Seite des Kolbens (159) befindenden Ende eine Verengung (152) hat, wobei der Reinigungsgas-Einlass (22, 66) vorzugsweise ein Rohr (148) mit einem Innengewinde aufweist, in das vorzugsweise eine die Verengung (152) bildende Drossel (149) lösbar eingeschraubt ist.

9. Einrichtung nach einem der Ansprüche 6 bis 8, **dadurch gekennzeichnet, dass** sie mindestens eine Nass-Reinigungsvorrichtung (23, 25, 67, 68) aufweist, um eine Reinigungsflüssigkeit gegen die Aussenfläche des Filtrationselements (125) zu sprühen, dass der Wandungsteil (17, 61, 251) eine sich auf seiner oberen Seite befindende, an den Reingas-Raum (30, 71, 270) angrenzende Fläche besitzt, dass die bzw. jede Verschlussvorrichtung (21, 65) und die bzw. jede Nass-Reinigungsvorrichtung (23, 25, 67, 68) mindestens eine an den Reingas-Raum (30, 71, 270) angrenzende, sich auf der oberen Seite eines Teils der betreffenden Vorrichtung (21, 23, 25, 65, 67, 68) befindende Fläche besitzt, dass der Behälter (3, 53) mit einem absperrbaren Flüssigkeitsauslass (48, 78) versehen ist und dass die genannten, an den Reingas-Raum (30, 71, 270) angrenzenden Flächen im wesentlichen derart geneigt sind, dass allenfalls auf die genannten Flächen gelangende Reinigungsflüssigkeit zum Flüssigkeitsauslass (48, 78) fliessen und durch diesen abgeleitet werden kann.

10. Einrichtung nach einem der Ansprüchen 6 bis 9, **dadurch gekennzeichnet, dass** Reinigungsgas-Zufuhrmittel (95) mit dem Reinigungsgas-Einlass (22, 66) der bzw. jeder Gas-Reinigungsvorrichtung (20, 64, 266) verbunden und ausgebildet sind, um der bzw. jeder Gas-Reinigungsvorrichtung (20, 64, 266) ein Reinigungsgas zuzuführen, dessen Druck mindestens 100 kPa und beispielsweise 200 kPa bis 1000 kPa grösser ist als der Umgebungsluftdruck, dass Reinigungsflüssigkeits-Zufuhrmittel (96) mit der bzw. jeder Nass-Reinigungsvorrichtung (23, 25, 67, 68) verbunden und ausgebildet sind, um der bzw. jeder Nass-Reinigungsvorrichtung (23, 25, 67, 68) eine Reinigungsflüssigkeit mit einem Druck von 200 kPa bis 600 kPa zuzuführen, und dass der Mantel (121, 257) des bzw. jedes Filters (19, 63, 255) derart stabil ausgebildet ist, um Reinigungen mit dem den gennanten Druck aufweisenden Reinigungsgas und der den genannten Druck aufweisenden Reinigungsflüssigkeit unbeschädigt zu überstehen.

11. Einrichtung nach einem der Ansprüche 1 bis 10, **dadurch gekennzeichnet, dass** das Drahtgewebe des Filtrationselements (125) bei allen genannten Berührungsstellen mit dem Stützelement (122) versintert ist.

12. Einrichtung nach einem der Ansprüche 1 bis 11, **dadurch gekennzeichnet, dass** das bzw. jedes Filter (19, 63, 255) lösbar an einem Wandungsteil (17, 61, 251) des Behälters (3, 53) befestigt ist.

13. Einrichtung nach Anspruch 12, **dadurch gekennzeichnet**, das das bzw. jedes Filter (19, 63) wegnehmbar an einer dem Rohgas-Raum zugewandten Fläche des Wandungsteil (17, 61) anliegt und durch ein vom Rohgas-Raum (29, 70) her lösbares Befestigungselement (132) am Wandungsteil (17, 61) befestigt ist, wobei das Befestigungselement (132) bei einem dem Wandungsteil (17, 61) abgewandten Ende des Filters (19, 63) zugänglich ist.

14. Einrichtung nach Anspruch 12 oder 13, **dadurch gekennzeichnet, dass** das bzw. jedes Filter (19, 63, 255) an einem Ende einen Ring (127, 263) aufweist, dass das Stützelement (122) und das Filtrationselement (125) an einem Ende entlang ihrem ganzen Umfang mit dem Ring (127, 263) verschweisst oder verlötet sind und dass der Ring (127, 263) wegnehmbar am Wandungsteil (17, 61, 251) anliegt.

15. Einrichtung nach einem der Ansprüche 6 bis 14, **dadurch gekennzeichnet, dass** das Stützelement (122) sowie das Filtrationselement (125) an ihrem dem Wandungsteil (17, 61) abgewandten Ende entlang ihrem ganzen Umfang mit einer Scheibe (129) verschweisst oder verlötet sind, die eine dem Wandungsteil (17, 61) zugewandte, nach aussen von diesem weggeneigte Fläche (129b) hat.

16. Einrichtung nach Anspruch 15, **dadurch gekennzeichnet, dass** die Scheibe (129) im Zentrum ein Loch (129a) hat und dass das Filter (19, 63) mit das Loch (129a) der Scheibe (129) durchdringenden Befestigungsmitteln lösbar am Wandungsteil (17, 61) befestigt ist.

17. Einrichtung nach Anspruch 16, **dadurch gekennzeichnet, dass** die Scheibe (129) mit einer von ihr und vom Mantel (121) wegragenden, sich von der Scheibe (129) weg verjüngenden Endwand (131) verschweisst oder verlötet ist und dass die Scheibe (129) und die Endwand (131) durch eine zum Loch (129a) der Scheibe (129) koaxiale, ein durchgehendes axiales Loch aufweisenden Hülse (130) fest miteinander verbunden sind.

18. Einrichtung nach einem der Ansprüche 12 bis 14, **dadurch gekennzeichnet, dass** das Stützelement sowie das Filtrationselement an ihrem dem Wandungsteil (251) abgewandten Ende mit einer sich vom Wandungsteil (251) weg verjüngenden, gasdurchlässigen Endwand (259) verschweisst oder verlötet sind, die innen ein Stützelement mit Gasdurchlasslöchern und aussen ein Filtrationselement mit Gasdurchlasslöchern aufweist, deren lichte Weiten kleiner als die lichten Weiten der Gasdurchlasslöcher des Stützelements der Endwand (259) sind.

## Claims

1. Apparatus for removing dust from gas, having a container (3, 53) bounding a crude gas space (29, 70, 269), at least one filter (19, 63, 255) projecting into the crude gas space (29, 70, 269) and gas conduction means (81) for passing the gas from the crude gas space (29, 70, 269) through the filter or filters (19, 63, 255), the or each filter (19, 63, 255) having a casing (121, 257) with a metallic support member (122) and a filtration member (125) enclosing said support member, supported by said support member and having an inner surface, an outer surface directly adjacent to the crude gas space (29, 70, 269) and gas passages, said support member (122) having gas passages, and the gas passages of the filtration member (125) having smaller internal diameters than the gas passages of the support member (122), **characterized in that** the support member (122) has at least one wire fabric (123, 124), that the filtration member (125) is metallic, has a wire fabric, rests substantially with its entire inner surface against the support member (122), is supported by the support member in a dimensionally stable manner and is sintered together with said support member (122) at contact points at which it touches the or a wire fabric (123) of the support member (122) and that the filtration member (125) is free of folds and/or waves.

2. Apparatus according to Claim 1, **characterized in that** the or each filter (19, 63, 255) defines a filter axis (120, 256) and that the support member (122) and the filtration member (125) are substantially rotationally symmetrical with respect to the filter axis (120, 256).

3. Apparatus according to Claim 1 or 2, **characterized in that** the support member (122) and filtration member (125) are substantially cylindrical.

4. Apparatus according to any of Claims 1 to 3, **characterized in that** all wire fabrics (123, 124) of the casing (121, 257) consist of stainless steel.

5. Apparatus according to any of Claims 1 to 4, **characterized in that** the support member (122) has an inner wire fabric (123) and an outer wire fabric (124) which is sintered together with said inner wire fabric and is sintered together with the filtration member (125) and has a smaller mesh size and is formed from thinner wires than the inner wire fabric (123).

6. Apparatus according to any of Claims 1 to 5, **characterized in that** the or each filter (19, 63, 255) is fastened to a wall part (17, 61, 251) of the container (3, 53) and bounds a filter interior (137, 271) which is connected by a passage (138, 272) to a clean gas space (30, 71, 270) located on one side of the wall part (17, 61, 251), said side facing away from the crude gas space (29, 70, 269), and that a gas cleaning device (20, 64, 266) having a cleaning gas inlet (22, 66) and a closure device (21, 65) is present for the or each filter (20, 63, 255) in order temporarily to pass cleaning gas into the filter interior (137, 271) and in order to close the passage (138, 272) on introduction of cleaning gas into the filter interior (137, 271).

7. Apparatus according to Claim 6, **characterized in that** the or each gas cleaning device (20, 64, 266) has a casing (142) enclosing the cleaning gas inlet (22, 66) in cross-section and a piston (159) displaceable in said casing and connected to a closure member (155), that the casing (142) is tightly sealed on that side of the piston (159) which faces away from the filter (19, 63, 255) by an end member (143) and that the cleaning gas inlet (22, 66) is rigidly connected to the wall part (17, 61, 251), passes through the piston (159) and the closure member (155), encloses a second passage (151) connected to the filter interior (137, 271) and has at least one hole (148a) which connects the second passage (151) to an interior region (162) enclosed by the casing (142) and present between the end member (143) and the piston (159).

8. Apparatus according to Claim 7, **characterized in that** the second passage (151) has a constriction (152) between the or each hole (148a) and its end located on that side of the piston (159) which faces away from the or each hole (148a), the cleaning gas inlet (22, 66) preferably having a pipe (148) with an internal thread into which preferably a choke (149) forming the constriction (152) is detachably screwed.

9. Apparatus according to any of Claims 6 to 8, **characterized in that** it has at least one wet cleaning device (23, 25, 67, 68) for spraying a cleaning liquid against the outer surface of the filtration member (125), that the wall part (17, 61, 251) has a surface on an upper side of said wall part and adjacent to the clean gas space (30, 71, 270), that the or each closure device (21, 65) and the or each wet cleaning device (23, 25, 67, 68) has at least one surface adjacent to the clean gas space (30, 71, 270) and present on the upper side of a part of the relevant device (21, 23, 25, 65, 67, 68), that the container (3, 53) is provided with a closable liquid outlet (48, 78) and that said surfaces adjacent to the clean gas space (30, 71, 270) are substantially inclined such that any cleaning liquid reaching said surfaces can flow to the liquid outlet (48, 78) and can be discharged through said liquid outlet.

10. Apparatus according to any of Claims 6 to 9, **characterized in that** cleaning gas feed means (95) are connected to the clean gas inlet (22, 66) of the or each gas cleaning device (20, 64, 266) and are formed in order to feed to the or each gas cleaning device (20, 64, 266) a cleaning gas whose pressure is at least 100 kPa and, for example, 200 kPa to 1000 kPa greater than the ambient air pressure, that cleaning liquid feed means (96). are connected to the or each wet cleaning device (23, 25, 67, 68) and are formed in order to feed to the or each wet cleaning device (23, 25, 67, 68) a cleaning liquid having a pressure of 200 kPa to 600 kPa, and that the casing (121, 257) of the or each filter (19, 63, 255) is formed in a sufficiently stable manner to withstand without damage cleaning operations with the cleaning gas having said pressure and with the cleaning liquid having such pressure.

11. Apparatus according to any of Claims 1 to 10, **characterized in that** the wire fabric of the filtration member (125) is sintered together with the support member (122) at all said contact points.

12. Apparatus according to any of Claims 1 to 11, **characterized in that** the or each filter (19, 63, 255) is detachably fastened to a wall part (17, 61, 251) of the container (3, 53).

13. Apparatus according to Claim 12, **characterized in that** the or each filter (19, 63) rests in a removable manner against a surface of the wall part (17, 61), said surface facing the crude gas space, and is fastened to the wall part (17, 61) by a fastening member (132) detachable from the crude gas space (29, 70), the fastening member (132) being accessible at one end of the filter (19, 63), said end facing away from the wall part (17, 61).

14. Apparatus according to Claim 12 or 13, **characterized in that** the or each filter (19, 63, 255) has a ring (127, 263) at one end, that the support member (122) and the filtration member (125) are welded or soldered at one end along their entire circumference to the ring (127, 263) and that the ring (127, 263) rests in a removable manner against the wall part (17, 61, 251).

15. Apparatus according to any of Claims 6 to 14, **characterized in that** the support member (122) and the filtration member (125) are welded or soldered at their end facing away from the wall part (17, 61), along their entire circumference, to a disc (129) which has a surface (129b) facing the wall part (17, 61) and inclined outward away from said wall part.

16. Apparatus according to Claim 15, **characterized in that** the disc (129) has a hole (129a) in the centre and that the filter (19, 63) is detachably fastened to the wall part (17, 61) by fastening means passing through the hole (129a) in the disc (129).

17. Apparatus according to Claim 16, **characterized in that** the disc (129) is welded or soldered to an end wall (131) projecting away from said disc and from the casing (121) and tapering in a direction away from the disc (129) and that the disc (129) and the end wall (131) are connected firmly to one another by a sleeve (130) coaxial with the hole (129a) and the disc (129) and having an axial through-hole.

18. Apparatus according to any of Claims 12 to 14, **characterized in that** the support member and the filtration member are welded or soldered, at their end facing away from the wall part (251), to a gas-permeable end wall (259) which tapers in a direction away from the wall part (251) and has, on the inside, a support member with gas passages and, on the outside, a filtration member with gas passages whose internal diameters are smaller than the internal diameters of the gas passages of the support member of the end wall (259).

## Revendications

1. Dispositif de dépoussiérage d'un gaz, comprenant un récipient (3, 53) délimitant une chambre (29, 70, 269) à gaz brut, au moins un filtre (19, 63, 255) s'engageant dans ladite chambre (29, 70, 269) à gaz brut, et des moyens (81) de guidage du gaz pour guider respectivement ledit gaz à travers le ou les filtre(s) (19, 63, 255), à partir de ladite chambre (29, 70, 269) à gaz brut, le ou chaque filtre (19, 63, 255) possédant respectivement une enveloppe (121, 257) pourvue d'un élément métallique d'appui (122) comportant des trous de passage du gaz, et d'un élément de filtration (125) qui entoure l'élément précité par lequel il est soutenu, et comprend une surface intérieure, une surface extérieure adjacente à la chambre (29, 70, 269) à gaz brut, ainsi que des trous de passage du gaz, sachant que les trous de passage du gaz à travers l'élément de filtration (125) présentent de plus petites largeurs intérieures que les trous de passage du gaz à travers l'élément d'appui (122), **caractérisé par le fait que** l'élément d'appui (122) présente au moins un tressage métallique (123, 124); **par le fait que** l'élément de filtration (125) est métallique, présente un tressage métallique, porte pour l'essentiel par toute sa surface intérieure contre l'élément d'appui (122), est soutenu par ce dernier avec stabilité de forme et est solidarisé par frittage avec ledit élément dans des zones de contact dans lesquelles il touche respectivement le ou un tressage métallique (123) dudit élément d'appui (122) ; et **par le fait que** l'élément de filtration (125) est dépourvu de plis et/ou d'ondulations.

2. Dispositif selon la revendication 1, **caractérisé par le fait que** le ou chaque filtre (19, 63, 255) définit respectivement un axe (120, 256) de filtre ; et **par le fait que** l'élément d'appui (122) et l'élément de filtration (125) présentent, pour l'essentiel, une symétrie de révolution vis-à-vis dudit axe (120, 256) de filtre.

3. Dispositif selon la revendication 1 ou 2, **caractérisé par le fait que** l'élément d'appui (122) et l'élément de filtration (125) sont sensiblement cylindriques.

4. Dispositif selon l'une des revendications 1 à 3, **caractérisé par le fait que** tous les tressages métalliques (123, 124) de l'enveloppe (121, 257) consistent en de l'acier inoxydable.

5. Dispositif selon l'une des revendications 1 à 4, **caractérisé par le fait que** l'élément d'appui (122) comprend un tressage métallique intérieur (123) et un tressage métallique extérieur (124) qui est solidarisé par frittage avec le tressage précité, dans des zones de contact, est solidarisé par frittage avec l'élément de filtration (125), possède une plus petite largeur de mailles, et est constitué par des fils métalliques plus minces que ceux dudit tressage métallique intérieur (123).

6. Dispositif selon l'une des revendications 1 à 5, **caractérisé par le fait que** le ou chaque filtre (19, 63, 255) est respectivement fixé à une partie de cloisonnement (17, 61, 255) du récipient (3, 53), et délimite une chambre intérieure de filtration (137, 271) reliée, par l'intermédiaire d'un passage (138, 272), à une chambre (30, 71, 270) à gaz pur qui est située sur le côté de la partie de cloisonnement (17, 61, 251) tourné à l'opposé de la chambre (29, 70, 269) à gaz brut ; et par la présence, pour le ou chaque filtre respectif (19, 63, 255), d'un dispositif (20, 64, 266) d'épuration par gaz comprenant une admission (22, 66) de gaz d'épuration et un dispositif d'obturation (21, 65), afin d'introduire provisoirement du gaz d'épuration dans la chambre intérieure de filtration (137, 271), et afin de fermer le passage (138, 272) lors de l'introduction de gaz d'épuration dans ladite chambre intérieure de filtration (137, 271).

7. Dispositif selon la revendication 6, **caractérisé par le fait que** le ou chaque dispositif respectif (20, 64, 266) d'épuration par gaz comprend une enveloppe (142) ceinturant, en coupe transversale, l'admission (22, 66) de gaz d'épuration, et un piston (159) pouvant coulisser dans ladite enveloppe et relié à un organe obturateur (155) ; **par le fait que** ladite enveloppe (142) est fermée hermétiquement, par un élément de fermeture (143), du côté du piston (159) qui est tourné à l'opposé du filtre (19, 63, 255) ; et **par le fait que** ladite admission (22, 66) de gaz d'épuration est reliée rigidement à la partie de cloisonnement (17, 61, 251), traverse le piston (159) et l'organe obturateur (155), ceinture un second passage (151) relié à la chambre intérieure de filtration (137, 271), et comporte au moins un trou (148a) qui relie le second passage (151) à une région spatiale intérieure (162) ceinturée par l'enveloppe (142), et située entre ledit élément de fermeture (143) et ledit piston (159).

8. Dispositif selon la revendication 7, **caractérisé par le fait que** le second passage (151) présente un rétrécissement (152) entre le ou chaque trou respectif (148a), et son extrémité située du côté du piston (159) qui est respectivement tourné à l'opposé du ou de chaque trou (148a), l'admission (22, 66) de gaz d'épuration étant de préférence munie d'une tubulure (148) présentant un filetage intérieur dans lequel est préférentiellement vissé, de manière amovible, un étranglement (149) matérialisant ledit rétrécissement (152).

9. Dispositif selon l'une des revendications 6 à 8, **caractérisé par le fait qu'**il comporte au moins un dispositif (23, 25, 67, 68) de nettoyage humide, afin de pulvériser un liquide de nettoyage contre la surface extérieure de l'élément de filtration (125); **par le fait que** la partie de cloisonnement (17, 61, 251) possède une surface située sur son côté supérieur et limitrophe de la chambre (30, 71, 270) à gaz pur ; **par le fait que** le ou chaque dispositif respectif d'obturation (21, 65), et le ou chaque dispositif respectif (23, 25, 67, 68) de nettoyage humide, possède au moins une surface limitrophe de ladite chambre (30, 71, 270) à gaz pur et située sur le côté supérieur d'une partie du dispositif considéré (21, 23, 25, 65, 67, 68); **par le fait que** le récipient (3, 53) est doté d'une sortie (48, 78) de liquide, pouvant être isolée ; et **par le fait que** les surfaces précitées, limitrophes de la chambre (30, 71, 270) à gaz pur, sont pour l'essentiel inclinées de façon telle que du liquide de nettoyage, parvenant éventuellement sur les surfaces précitées, puisse s'écouler vers la sortie (48, 78) de liquide, et puisse être évacué par l'intermédiaire de cette dernière.

10. Dispositif selon l'une des revendications 6 à 9, **caractérisé par le fait que** des moyens (95) d'amenée de gaz d'épuration sont reliés à l'admission (22, 66) de gaz d'épuration du ou de chaque dispositif respectif (20, 64, 266) d'épuration par gaz, et sont réalisés pour délivrer, au ou à chaque dispositif respectif (20, 64,266) d'épuration par gaz, un gaz d'épuration dont la pression excède d'au moins 100 kPa et, par exemple, de 200 kPa à 1 000 kPa, la pression de l'air ambiant ; **par le fait que** des moyens (96) d'amenée de liquide de nettoyage sont reliés au ou à chaque dispositif respectif (23, 25, 67, 68) de nettoyage humide et sont réalisés pour délivrer, au ou à chaque dispositif respectif (23, 25, 67, 68) de nettoyage humide, un liquide de nettoyage sous une pression comprise entre 200 kPa et 600 kPa; et **par le fait que** l'enveloppe (121, 257) du ou de chaque filtre respectif (19, 63, 255) est d'une réalisation stable propre à résister, sans dégradations, à des nettoyages à l'aide du gaz d'épuration présentant la pression précitée, et à l'aide du liquide de nettoyage présentant la pression précitée.

11. Dispositif selon l'une des revendications 1 à 10, **caractérisé par le fait que** le tressage métallique de l'élément de filtration (125) est solidarisé par frittage, avec l'élément d'appui (122), dans toutes les zones de contact précitées.

12. Dispositif selon l'une des revendications 1 à 11, **caractérisé par le fait que** le ou chaque filtre (19, 63, 255) est respectivement fixé, de manière amovible, à une partie de cloisonnement (17, 61, 251) du récipient (3, 53).

13. Dispositif selon la revendication 12, **caractérisé par le fait que** le ou chaque filtre (19, 63) porte respectivement, de manière démontable, contre une surface de la partie de cloisonnement (17, 61) qui est tournée vers la chambre à gaz brut, et est fixé à ladite partie de cloisonnement (17, 61) par l'intermédiaire d'un élément de fixation (132) démontable à partir de ladite chambre (29, 70) à gaz brut, ledit élément de fixation (132) étant accessible au niveau d'une extrémité du filtre (19, 63) qui est tournée à l'opposé de la partie de cloisonnement (17, 61).

14. Dispositif selon la revendication 12 ou 13, **caractérisé par le fait que** le ou chaque filtre (19, 63, 255) présente respectivement une bague (127, 263) à une extrémité; **par le fait que** l'élément d'appui (122) et l'élément de filtration (125) sont soudés ou brasés sur ladite bague (127, 263) par une extrémité, le long de tout leur pourtour; et **par le fait que** ladite bague (127, 263) porte, de manière démontable, contre la partie de cloisonnement (17, 61, 251).

15. Dispositif selon l'une des revendications 6 à 14, **caractérisé par le fait que** l'élément d'appui (122), ainsi que l'élément de filtration (125), sont soudés ou brasés par leur extrémité tournée à l'opposé de la partie de cloisonnement (17, 61), le long de tout leur pourtour, sur un disque (129) muni d'une surface (129b) tournée vers ladite partie de cloisonnement (17, 61) et inclinée, vers l'extérieur, à l'écart de cette dernière.

16. Dispositif selon la revendication 15, **caractérisé par le fait que** le disque (129) possède un trou (129a) en son centre ; et **par le fait que** le filtre (19, 63) est fixé amoviblement, à la partie de cloisonnement (17, 61), par des moyens de fixation traversant ledit trou (129a) dudit disque (129).

17. Dispositif selon la revendication 16, **caractérisé par le fait que** le disque (129) est soudé ou brasé sur une paroi extrême (131) qui dépasse dudit disque ou de l'enveloppe (121), et se rétrécit à l'écart dudit disque (129); et **par le fait que** le disque (129) et la paroi extrême (131) sont reliés fermement l'un à l'autre par l'intermédiaire d'une douille (130) coaxiale au trou (129a) dudit disque (129), et munie d'un trou axial traversant.

18. Dispositif selon l'une des revendications 12 à 14, **caractérisé par le fait que** l'élément d'appui, ainsi que l'élément de filtration, sont soudés ou brasés, par leur extrémité tournée à l'opposé de la partie de cloisonnement (251), sur une paroi extrême (259) qui est perméable aux gaz, se rétrécit à l'écart de ladite partie de cloisonnement (251), est intérieurement munie d'un élément d'appui présentant des trous de passage du gaz et est pourvue, extérieurement, d'un élément de filtration présentant des trous de passage du gaz dont les largeurs intérieures sont plus petites que les largeurs intérieures des trous de passage du gaz à travers l'élément d'appui de ladite paroi extrême (259).
